# EUROPÄISCHE PATENTANMELDUNG

(11) **EP 0 849 700 A1**
(43) Veröffentlichungstag der Anmeldung: **24.06.1998**
(21) Anmeldenummer: 97203809.5
(22) Anmeldetag: 05.12.1997
(51) Int. Cl.: G06K 11/18

(54) **Anordnung zum Eingeben von Koordinatenwerten**

(30) Priorität: 17.12.1996 DE 19652491
(71) Anmelder: Philips Patentverwaltung GmbH, 22335 Hamburg (DE); PHILIPS ELECTRONICS N.V., 5621 BA Eindhoven (NL)
(72) Erfinder: Böh, Frank, Röntgenstrasse 24, 22335 Hamburg (DE)
(74) Vertreter: Poddig, Dieter, Dipl.-Ing.

(57) **Zusammenfassung**

Es ist bekannt, eine Maus drahtlos mit einem PC zu verbinden, beispielsweise über eine Infrarot-Verbindung oder über eine Hochfrequenz-Funkstrecke. Die Maus muß dabei eine Energiequelle aufweisen, da sie Bewegungsdaten aktiv an den PC überträgt. Erfindungsgemäß wird diese Energiequelle vermieden, indem die Unterlage bzw. das Mauspad (20) und ebenso die Maus (1) mit je einer flachen Spule (9, 11) versehen werden. Die Spule des Mauspads erzeugt ständig ein magnetisches Wechselfeld, aus dem die Maus ihre Betriebsspannung gewinnt. Die Bewegungsdaten von der Maus zum Mauspad werden vorzugsweise durch Belastungsmodulation übertragen, die von einer an die Spule des Mauspads angeschlossenen Steueranordnung, die auch das magnetische Wechselfeld speist, detektiert werden kann. Auch eine Übertragung von Daten vom Mauspad zur Maus ist durch eine Modulation der Speisung des magnetischen Wechselfeldes möglich.

## Beschreibung

Die Erfindung betrifft eine Anordnung zum Eingeben von x-y-Koordinatenwerten in ein Datenverarbeitungsgerät.

Derartige Anordnungen dienen häufig dazu, einen markierten Punkt, z.B. einen Cursor oder einen Pfeil, auf dem Bildschirm eines datenverarbeitenden Gerätes, z.B. eines PC, durch Bewegung eines Gegenstandes von Hand auf einer Unterlage zu steuern. Ein solcher Gegenstand ist auch unter der Bezeichnung "Maus" bekannt. Eine Maus enthält z.B. eine bewegliche Kugel, die an der Unterseite etwas herausragt. Wenn die Maus auf der Unterlage bewegt wird, dreht sich die Kugel, und diese Drehung wird in x-y-Koordinatendaten mit Hilfe einer in der Maus enthaltenen elektronischen Schaltung umgesetzt. Daneben gibt es noch verschiedene andere Methoden, die Bewegung der Maus in x-y-Koordinaten umzusetzen. Diese Daten werden dann an den PC übertragen und dort weiterverarbeitet.

Die einfachste und gebräuchlichste Form der Übertragung der Daten ist mit Hilfe eines Kabels, über das der Schaltung in der Maus auch die Betriebsspannung zugeführt wird. Das mit der Maus verbundene Kabel behindert jedoch die Benutzung. Es sind auch Anordnungen bekannt, beispielsweise aus der EP 0505126 A2 oder aus der JP 96-143563, wobei die Bewegungsdaten von der Maus drahtlos, z.B. über eine optische Infrarot-Verbindung oder über eine Funkverbindung bzw. ein elektromagnetisches Wechselfeld, zum PC übertragen werden. Dafür ist jedoch in der Maus eine elektrische Energiequelle, üblicherweise in Form einer Batterie, notwendig. Diese Energiequelle hat eine begrenzte Kapazität, so daß sie bei langem Gebrauch der Anordnung häufig ersetzt werden muß. Dies ist für den Benutzer zeitraubend und lästig.

Aufgabe der Erfindung ist es, eine Anordnung zum Eingeben von x-y-Koordinatenwerten in eine Datenverarbeitungsgerät mit einer drahtlosen Übertragungstrecke anzugeben, bei der in dem beweglichen Gegenstand keine Energiequelle erforderlich ist.

Diese Aufgabe wird erfindungsgemäß im wesentlichen dadurch gelöst, daß in dem Gegenstand eine erste Spule und in der Unterlage, auf der der Gegenstand bewegt wird, eine zweite Spule angeordnet wird und in der in der Unterlage enthaltenen zweiten Spule ständig ein magnetisches Wechselfeld erzeugt wird. Dieses Feld induziert in der Spule des Gegenstands eine Spannung, aus der die Betriebsspannung für die Schaltung in dem Gegenstand abgeleitet werden kann. Die Datenübertragung vom Gegenstand zum Datenverarbeitungsgerät erfolgt dadurch, daß mittels eines Modulators der in der Spule des Gegenstands fließende Strom verändert wird, vorzugsweise durch eine ohmsche Belastung der Spulenspannung, die gemäß den zu übertragenden Daten verändert wird. Eine derartige Belastungsänderung kann leicht in einer Steueranordnung, die an die Unterlage angeschlossen ist und die einen Generator zur Erzeugung des magnetischen Wechselfeldes enthält, detektiert werden. Die Steueranordnung ist ihrerseits mit dem Datenverarbeitungsgerät verbunden und enthält über dieses die Betriebsenergie. Die Steueranordnung kann auch Teil des PC sein.

Für eine möglichst wirksame Energieübertragung zum beweglichen Gegenstand ist es zweckmäßig, daß die Ausdehnung der ersten Spule im wesentlichen durch die Größe des Gegenstands und die Ausdehnung der zweiten Spule im wesentlichen durch die Größe der Unterlage bestimmt ist. Die Unterlage ist stets wesentlich größer als der Gegenstand, damit der Gegenstand auch bei Bewegung auf der Unterlage bleibt, so daß der Gegenstand stets einen maximalen Teil des in der Spule der Unterlage erzeugten magnetischen Wechselfeldes erfaßt. Dadurch besteht eine gute Kopplung zwischen beiden Spulen, so daß die von der Schaltung in dem Gegenstand benötigte Leistung gut übertragen werden kann.

Eine vorteilhafte Ausgestaltung der Erfindung sieht vor, daß wenigstens die erste Spule Teil eines auf die Frequenz des magnetischen Wechselfeldes abgestimmten Resonanzkreises ist. Bei einem Resonanzkreis auf der Seite der Unterlage, der zweckmäßig als Serien-Resonanzkreis ausgebildet wird, könnten leichter Oberwellen in dem vom Generator erzeugte Signal und damit im magnetischen Wechselfeld vermieden werden. Ferner ermöglicht ein Serien-Resonanzkreis eine bessere Anpassung an den Generator und bewirkt gleichzeitig eine Gleichstrom-Entkopplung. Ein Resonanzkreis erhöht auch die Empfindlichkeit der Steueranordnung zur Auswertung der Belastungsänderung durch den Gegenstand. Ein Resonanzkreis in dem Gegenstand ist zweckmäßig als Parallel-Resonanzkreis ausgebildet und erlaubt eine Reduzierung der Windungszahl der ersten Spule im Gegenstand und eine bessere Leistungsanpassung für die Versorgung der Schaltung im Gegenstand.

Häufig ist es nicht nur erwünscht, Bewegungsdaten von dem Gegenstand zum Datenverarbeitungsgerät zu übertragen, sondern auch umgekehrt, beispielsweise um charakteristische Daten des Gegenstands abzufragen, die die Art des Gegenstands angeben. Dafür ist es zweckmäßig, wenn das magnetische Wechselfeld in der Spule der Unterlage von der Steueranordnung moduliert werden kann, was in dem Gegenstand leicht demoduliert werden kann.

Wenn der Gegenstand eine Maus in einer der bekannten Ausführungen ist, sind darauf auch üblicherweise zwei oder drei Tastschalter vorhanden, bei deren Betätigung in dem Datenverarbeitungsgerät festgelegt Vorgänge ausgelöst werden. Die Übertragung der Betätigung bzw. der Stellung der Tastschalter zum Datenverarbeitungsgerät kann auf einfache Weise dadurch erfolgen, daß die Stellung der Tastschalter ebenfalls den Modulator in dem Gegenstand steuern.

Ausführungsbeispiele der Erfindung werden nachfolgend anhand der Zeichnung näher erläutert. Es zeigen
Fig. 1 ein schematisches Schaltbild der gesamten Anordnung,
Fig. 2 schematisch den räumlichen Aufbau insbesondere der Spulen im Gegenstand und in der Unterlage.

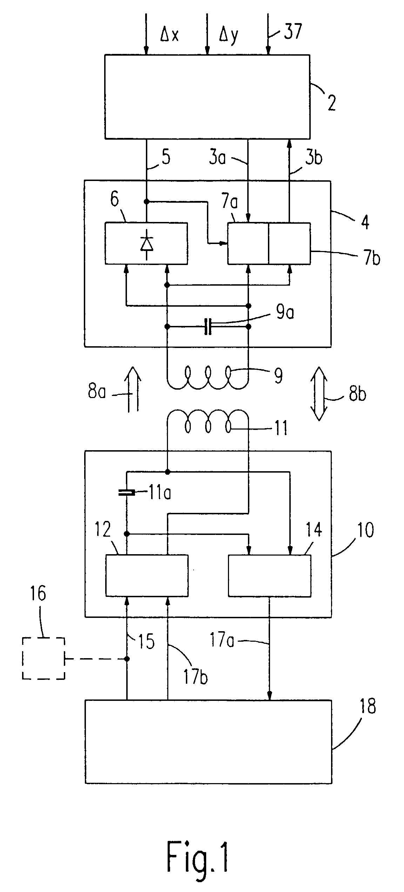

In Fig. 1 ist im oberen Teil die im beweglichen Gegenstand enthaltene Schaltung angedeutet. Diese umfaßt einen Schaltungsteil 2, der in jeder üblichen Maus vorhanden ist und der die abgetastete Bewegung Δx und Δy in Daten auf einer Leitung 3a umsetzt, die zu einem Datenverarbeitungsgerät 18 übertragen werden sollen, das in Fig. 1 schematisch im unteren Teil angedeutet ist. Außerdem wird in dem Schaltungsteil 2 über einen Eingang 37 auch die Stellung von nicht dargestellten Tastschaltern in Daten umgesetzt. Diese Daten auf der Leitung 3a werden hier einem weiteren Schaltungsteil 4 zugeführt, der einen Modulator 7a und einen Gleichrichter 6 enthält, die beide mit einer Spule 9 verbunden sind.

Diese Spule 9 ist induktiv mit einer Spule 11 gekoppelt, die in einer Unterlage angeordnet ist, wie später näher erläutert wird. Diese Spule 11 ist mit einer Steueranordnung 10 über einen Kondensator 11a verbunden, der zusammen mit der Spule 11 einen Serien-Resonanzkreis bildet. Die Steueranordnung 10 enthält einen Generator 12 sowie einen Demodulator 14. Der Generator 12 liefert einen Wechselstrom an die Spule 11, der ein magnetisches Wechselfeld in der Spule 11 erzeugt, das auch von der Spule 9 aufgenommen wird. Der Detektor 14 detektiert Änderungen des magnetischen Wechselfeldes, die sich insbesondere in einer Änderung des durch die Spule 11 und den Kondensator 11a fließenden Stromes bemerkbar machen, und leitet daraus Daten ab, die über die Datenleitung 17a dem Datenverarbeitungsgerät 18 zugeführt werden. Der Generator 12 erhält seine Betriebsspannung über die Leitung 15 von dem Gerät 18. Es ist jedoch auch möglich, für die Steueranordnung 10 eine eigene Energiequelle 16 vorzusehen. Außerdem erhält der Generator 12 ggf. Daten über die Leitung 17b von dem Datenverarbeitungsgerät 18. Es kann auch nur eine Datenieitung für eine bidirektionale Übertragung vorgesehen sein.

Die Funktion der in Fig. 1 dargestellten Anordnung ist wie folgt.

Das von Spule 11 erzeugte magnetische Wechselfeld, das von der Spule 9 aufgenommen wird, erzeugt darin eine Wechselspannung. Durch den parallel geschalteten Kondensator 9a ergibt sich ein Schwingkreis, der auf die Frequenz des magnetischen Wechselfeldes abgestimmt ist. Die von der Spule abgegebene Wechselspannung wird einem Gleichrichter 6 zugeführt, der daraus die Betriebsspannung für den Modulator 7a sowie über die Leitung 5 für den Schaltungsteil 2 erzeugt. Die von diesem Schaltungsteil 2 über die Leitung 3a abgegebenen Bewegungsdaten werden dem Modulator 7a zugeführt, der eine Belastungsmodulation der Spule bzw. des Schwingkreises 9, 9a erzeugt, beispielsweise indem ein beiden Spulen-Anschlüssen parallel geschalteter Transistor ein- und ausgeschaltet wird.

Wenn die Belastung des Schwingkreises 9, 9a geändert wird, ändert sich auch der Strom, der durch die mit der Spule 9 gekoppelten Spule 11 fließt, und diese Änderung wird vom Detektor 14 erfaßt, und die auf der Leitung 3a erzeugten Daten werden auf der zum Datenverarbeitungsgerät 18 führenden Leitung 17a zurückgewonnen.

Wenn außerdem Steuerdaten von dem Gerät 18 zum Schaltungsteil 2 in dem beweglichen Gegenstand übertragen werden sollen, werden diese Steuerdaten über die Leitung 17b dem Generator 12 zugeführt und erzeugen dort beispielsweise eine Amplitudenmodulation, die als Modulation des magnetischen Wechselfeldes auf die Spule 9 übertragen wird. In dem Schaltungsteil 4 ist dann außer dem Modulator 7a auch ein Demodulator 7b für diese Amplitudenmodulation vorhanden, der daraus die Steuerdaten zurückgewinnt und über die Leitung 3b zum Schaltungsteil 2 überträgt. Solche Steuerdaten, die zur Maus übertragen werden, können beispielsweise für eine Authentifikation des Benutzers über eine persönlich zugeordnete Maus dienen. Dafür enthält die Maus zusätzlich eine Verschlüsselungsschaltung, die die empfangenen Steuerdaten verschlüsselt und zurücksendet. Dies bildet eine Art automatischer "log-in", sobald der Benutzer des Datenverarbeitungsgerätes 18 seine persönliche Maus auf die Unterlage legt.

Auf diese Weise wird die Energie zum Betrieb der Schaltung aus den Schaltungsteilen 2 und 4 durch das Magnetfeld von der Spule 11 zur Spule 9 übertragen, wie durch den Pfeil 8a angedeutet ist, während Daten über diesen Weg gemäß dem Pfeil 8b in beiden Richtungen übertragen werden können.

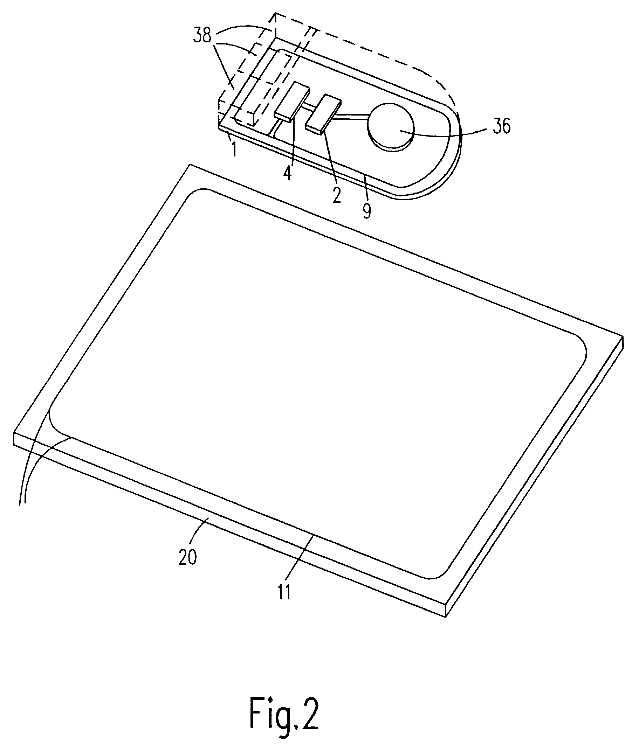

In Fig. 2 sind Teile der erfindungsgemäßen Anordnung in ihrem räumlichen Aufbau angedeutet. Eine Unterlage 20 aus einem üblichen weichen Material ist mit einer Spule 11 versehen, die mehrere Windungen aufweist, z.B. 10 Windungen, und die in der Ebene der Unterlage 20 an deren Rand verläuft. Die Anschlüsse der Spule 11 führen auf die Fig. 1 angegebene Steueranordnung 10, die in Fig. 2 nicht dargestellt ist.

Aus Gründen der Übersichtlichkeit ist ein beweglicher Gegenstand 1 in Form einer Maus in einiger Entfernung von der Unterlage 20 dargestellt, wobei klar ist, daß bei der Benutzung der Gegenstand 1 direkt auf der Unterlage 20 liegt und darauf von Hand in alle Richtungen geführt werden kann. Die Maus 1 ist nicht maßstabsgerecht, sondern gegenüber der Unterlage 20 größer dargestellt und das Oberteil des Gehäuses der Maus ist gestrichelt angedeutet. Die Maus 1 enthält in diesem Beispiel eine Kugel 36, die sich bei der Bewegung der Maus 1 über die Unterlage 20 dreht, und die Drehung wird von dem hier als Block dargestellten Schaltungsteil 2 in Daten umgesetzt und dem Schaltungsteil 4 zugeführt. Dieser ist mit den Enden einer Spule 9 verbunden, die ebenfalls eine Anzahl Windungen umfaßt, z.B. 100 Windungen, und die im Bodenteil der Maus 1 flach angeordnet ist und im wesentlichen entlang dem Rand der Maus verläuft. Wenn bei Benutzung die Maus 1 direkt auf der Unterlage 20 liegt, wird die Spule 9 stets von der Spule 11 vollständig überdeckt, so daß die Spule 9 einen maximalen Teil des von der Spule 11 erzeugten Magnetfeldes aufnimmt.

Die Maus 1 enthält ferner Tastschalter 38, deren nicht dargestellten Anschlüsse ebenfalls mit dem Schaltungsteil 4 verbunden sind, wie bei der Beschreibung der Fig. 1 erwähnt wurde.

Es ist klar, daß die Schaltungsteile 2 und 4 auch in einer gemeinsamen Schaltung, beispielsweise einer integrierten Schaltung, zusammen gefaßt sein können, ebenso wie die Steueranordnung 10 in Fig. 1 auch Teil des datenverarbeitenden Geräts 18 sein kann.

## Patentansprüche

1. Anordnung zum Eingeben von x-y-Koordinaten in ein Datenverarbeitungsgerät mit einem auf einer Unterlage beweglichen Gegenstand, der eine Schaltung enthält, die aus der Bewegung des Gegenstandes relativ zur Unterlage Daten ableitet und diese kontaktlos an das Datenverarbeitungsgerät überträgt, dadurch gekennzeichnet, daß der Gegenstand (1) eine erste, im wesentlichen ebene Spule (9) aufweist, daß die Unterlage (20) eine zweite, im wesentlichen ebene Spule (11) aufweist, wobei während der Benutzung beide Spulen (9, 11) im wesentlichen parallel zueinander liegen, daß an die zweite Spule (11) eine Steueranordnung (10) angeschlossen ist, die einen Generator (12) zur Erzeugung eines HF-Magnetwechselfeldes in der zweiten Spule (11) und einen ersten Detektor (14) zum Detektieren von Änderungen dieses Magnetwechselfeldes und zum Ableiten von Daten für das Datenverarbeitungsgerät enthält, und daß an die erste Spule (9) ein Gleichrichter (6) zur Versorgung der Schaltung (2, 4) im Gegenstand (1) mit Betriebsspannung und ein erster Modulator (7a) zur variablen Änderung des Stroms in der ersten Spule (9) gemäß den aus der Bewegung (Δx, Δy) abgeleiteten Daten angeschlossen ist.

2. Anordnung nach einem der vorhergehenden Ansprüche, dadurch gekennzeichnet, daß wenigstens die erste Spule (9) Teil eines auf die Frequenz des HF-Magnetwechselfeldes abgestimmten Resonanzkreises (9, 9a) ist.

3. Anordnung nach Anspruch 1 oder 2, dadurch gekennzeichnet, daß die Ausdehnung der Spule (9) im wesentlichen durch die Größe des Gegenstandes (1) und die Ausdehnung der zweiten Spule (11) im wesentlichen durch die Größe der Unterlage (20) bestimmt ist.

4. Anordnung nach Anspruch 1, 2 oder 3, dadurch gekennzeichnet, daß die Steueranordnung (10) einen zweiten Modulator (12) enthält, der das in der zweiten Spule (11) erzeugte Magnetwechselfeld mit Steuerdaten moduliert, und daß die Schaltung (2, 4) einen an die erste Spule (9) angeschlossenen zweiten Detektor (7b) zum Ableiten der Steuerdaten enthält.

5. Anordnung nach einem der Ansprüche 1 bis 4, dadurch gekennzeichnet, daß der Gegenstand (1) wenigstens einen Tastschalter (38) aufweist, dessen Stellung den ersten Modulator (7a) ebenfalls steuert.
